# EUROPEAN PATENT SPECIFICATION

(11) **EP 4 300 487 B1**
(45) Date of publication and mention of the grant of the patent: **01.07.2026**
(21) Application number: 21928132.6
(22) Date of filing: 24.12.2021
(51) Int. Cl.: G10L 17/00, H05B 6/12, G10L 15/10, G10L 15/28, G06F 3/16, F24C 7/08, G06F 3/01, G10L 15/22

(54) **METHOD FOR STARTING SPEECH INTERFACE, COMPUTER PROGRAM, AND CONTROL DEVICE**
VERFAHREN ZUM STARTEN EINER SPRACHSCHNITTSTELLE, COMPUTERPROGRAMM UND STEUERUNGSVORRICHTUNG
PROCÉDÉ DE DÉMARRAGE D'UNE INTERFACE VOCALE, PROGRAMME INFORMATIQUE ET DISPOSITIF DE COMMANDE

(30) Priority: 25.02.2021 JP 2021028720
(43) Date of publication of application: 03.01.2024
(73) Proprietor: Panasonic Intellectual Property Management Co., Ltd., Kadoma-shi, Osaka 571-0057 (JP)
(72) Inventor: FURUSAWA, Satoshi, Osaka 571-0057 (JP); FUJINAMI, Tomoya, Osaka 571-0057 (JP); HAYASHI, Masahiro, Osaka 571-0057 (JP)
(74) Representative: SSM Sandmair
(86) International application number: PCT/JP2021/048256
(87) International publication number: WO 2022/181039

(56) References cited:
- CN-A- 108 109 623
- JP-A- 2005 204 974
- JP-A- 2005 235 627
- JP-A- 2005 235 627
- JP-A- 2006 227 135
- JP-A- 2009 193 480
- JP-A- 2011 021 845
- JP-A- 2011 021 845
- JP-A- 2016 186 386
- JP-A- 2019 057 297
- US-A1- 2018 211 665
- US-A1- 2018 268 747
- US-A1- 2019 369 748
- US-A1- 2020 349 942

## Description

### TECHNICAL FIELD

The present disclosure relates to a method for activating a voice interface, a computer program, and a controller.

### BACKGROUND ART

Along with the advancement in speech recognition and semantic analysis technologies, there has been a significant increase in devices, equipment, robots, and services equipped with voice interfaces. A voice interface is a user interface with which a user gives an instruction using a speech (a voice command) to a device or the like and thereby operates the device or the like in accordance with the content of the voice command to acquire an output of the device. The voice interface is therefore superior in the operability and the convenience compared to the traditional user interfaces represented by a graphical user interface (GUI).

In Patent Document 1, in the case where a user wants to operate a television with his/her voice, the user utters a wake word and thereafter utters the content of the operation such as "Turn on the TV". A device having a speech recognition function recognizes whether the wake word is included in the speech and, in the case where the wake word is included therein, transmits speech data that indicates the speech of the operation content to the platform that provides a cloud service. The platform analyzes the received speech data and transmits control data that corresponds to the operation content to the device. The device transmits the control data received from the platform to the television. The operation content is thereby implemented.

### PRIOR ART DOCUMENT

### PATENT DOCUMENT

Patent Document 1: JP201986535A
US 2018/0211665 A1 discloses an electronic device including a microphone, a communication circuitry, an indicator configured to provide at least one visual indication, and a processor configured to be electrically connected with the microphone, the communication circuitry, and the indicator, and a memory. The memory stores instructions, when executed, cause the processor to receive a first voice input through the microphone, perform a first voice recognition for the first voice input, if a first specified word for waking up the electronic device is included in a result of the first voice recognition, display a first visual indication through the indicator, receive a second voice input through the microphone, perform a second voice recognition for the second voice input, and if a second specified word corresponding to the first visual indication is included in a result of the second voice recognition, wake up the electronic device.
CN 108109623 A discloses a cooking device including a distance sensor and a voice print recognition device.
US 2020/0349942 A1 discloses a home appliance including a sensor, a microphone, a speaker, and a processor. The processor is configured to, based on one of a first event wherein a user action is detected through the sensor or a second event wherein a trigger command for initiating a voice recognition mode is input through the microphone occurring, operate in the voice recognition mode, and control the speaker to output an audio signal corresponding to the event occurred, and the audio signal is an audio signal set differently for each of the first event and the second event.

### SUMMARY OF INVENTION

### TECHNICAL PROBLEM

The voice interface may react to a word that happens to be included in a speech output from a television or the like, and a device during its wake-up (standby) may thereby operate at a timing that is not intended by the user. It should essentially be avoided that the voice interface operates being triggered by a noise or the like and any operation not intended by the user is executed. Among various types of devices, for a heating device handling heating power or heat such as, for example, a cooking stove, it is required to configure the heating device to avoid execution of any operation not intended by the user, by the voice interface.

The present disclosure provides techniques relating to an activation of a voice interface to operate a heating device.

### MEANS FOR SOLVING PROBLEM

The invention is defined by claims 1 and 12. The dependent claims relate to preferred embodiments of the invention.

### ADVANTAGEOUS EFFECT OF INVENTION

According to the present disclosure, the techniques are provided that relate to activating a voice interface to operate a heating device.

### BRIEF DESCRIPTION OF DRAWINGS

Fig. 1A is a top diagram of kitchen equipment that has a heating cooker 1 incorporating therein a controller 100, disposed therein.
Fig. 1B is a diagram showing a scene in which a user 200 utters a voice command in the state where the presence of the user 200 is detected in a predetermined range R.
Fig. 2A is a diagram showing a scene in which no person is present and only a smartphone 202 is placed in the predetermined range R from the disposition position of the heating cooker 1.
Fig. 2B is a diagram showing the scene in which no person is present and only the smartphone 202 is placed in the predetermined range R from the disposition position of the heating cooker 1.
Fig. 3A is a diagram showing a heating cooker that incorporates therein a controller of the present disclosure.
Fig. 3B is a diagram showing an example of the configuration for the controller and the heating cooker 1 to each be included in a separate housing and to be connected to each other through a communications line.
Fig. 3C is a diagram showing an example of the configuration for the controller to be installed in a server device.
Fig. 4 is a hardware configuration diagram of the controller.
Fig. 5 is a perspective diagram of an induction heating cooker according to an exemplary embodiment.
Fig. 6 is a block diagram showing a control system of the induction heating cooker according to the exemplary embodiment.
Fig. 7 is a schematic diagram of the configuration of the induction heating cooker.
Fig. 8 is a partial schematic diagram of an operating section and a displaying section.
Fig. 9 is a flowchart showing a procedure for an operation executed by a computing section of the controller.
Fig. 10 is a flowchart showing a procedure for an operation executed by the computing section of the controller.

### DESCRIPTION OF EMBODIMENTS

### (Findings by Inventor of Present Application)

There are various advantages to users to operate devices through voice commands. For example, the user does not need to directly touch the device since it allows the user to operate the device hands-free. The user can operate the device from a distant place without checking the screen of the device. Even in the case where an urgent operation from a distant place is necessary, the user can quickly control the device through a speech. The user can execute a variety of operations apart from the operations that the user executes watching the screen of the device and the user's labor of inputting can be reduced because, using speeches, the user can easily invoke even a setting item present under a deep hierarchy and input thereinto.

In the case where a user operates a device using the above voice commands, the user traditionally first utters a speech called "wake-up word" that is determined in advance, and thereafter further utters an operational word that corresponds to the content of the operation wanted by the user to be executed. The device always receives a speech signal from a microphone, and determines whether the wake-up word is present in the content of the utterance. When the device recognizes the wake-up word, the device starts up its system and stands by for the speech of a subsequent operational word to, in the case where the device recognizes the operational word, execute the operation that corresponds to the operational word.

In the case where a user operates a device using a voice command, the device may mistakenly recognize a speech output from a television, a radio, a smartphone, or the like, as a wake-up word and may further recognize a speech output thereafter as an operational word. In this case, the device executes the operation that is assigned to the operational word. In the case, for example, where the device is a lighting fixture and the operation is to turn on the light, the influence caused by the mistaken recognition is slight. On the other hand, in the case where the device is a heating device handling heating power or heat, the influence caused by the mistaken recognition may be significant. An example of the heating device is an IH cooking heater including an IH stove, a gas cooker including a gas stove, or a heater.

The inventor of the present application considered that it was preferred that, when a heating device is operated using a voice command, a specific startup condition, with respect to a device handling no heating power and no heat (i.e., a non-heating device), should be imposed. For example, the inventor considered that it was preferred that presence or absence of any person in a range to be able to overlook the device (a predetermined range) was determined in advance to enable or disable the voice interface of the device. The heating device avoids mistakenly recognizing a speech of a television as a wake-up word or a voice command by disabling the voice interface of the device in the case where no person is present. On the other hand, the voice interface of the device is enabled in the case where a person is present in the predetermined range. In this case, the heating device may mistakenly recognize a noise or the like as the wake-up word or a voice command to ignite. However, because the person is present in the predetermined range, the person can quickly approach the heating device and extinguish the fire by a manual operation.

The inventor of the present application further considered that the case might also be present where only determining the presence or the absence of the person was insufficient. This is, for example, the case where, though the presence of a person is determined, a child, or a pet animal in the home is actually determined as a "person". When the child or the pet animal is determined as a "person", the voice interface can be enabled and the operation for the heating device by a voice command can be executed. In the case where unintended ignition is executed by the mistaken recognition of the voice command, however, the case where no operation to extinguish the fire is executed may occur.

The inventor of the present application determined that not only the determination of the presence or the absence of any person in the predetermined range from the heating device but also authentication of the person were executed and, from the result thereof, the voice interface was enabled or disabled. For example, the inventor determined that presence of a person in the predetermined range from the heating device and successful authentication of the person as a person registered in advance were imposed as the condition for enabling the voice interface of the heating device. An operation to extinguish the fire is thereby executed by the user even in the case where unintended ignition is executed by the voice interface.

Embodiments will be described below in detail with reference to the drawings as necessary. No unnecessarily detailed description may, however, be made. For example, no detailed description of an already well known item and no redundant description for a substantially identical configuration may be made. This is to avoid making the following description unnecessarily redundant and to facilitate understanding by those skilled in the art. The inventor provides the accompanying drawings and the following description for those skilled in the art to fully understand the present disclosure.

### (First Embodiment)

### (1)Overview

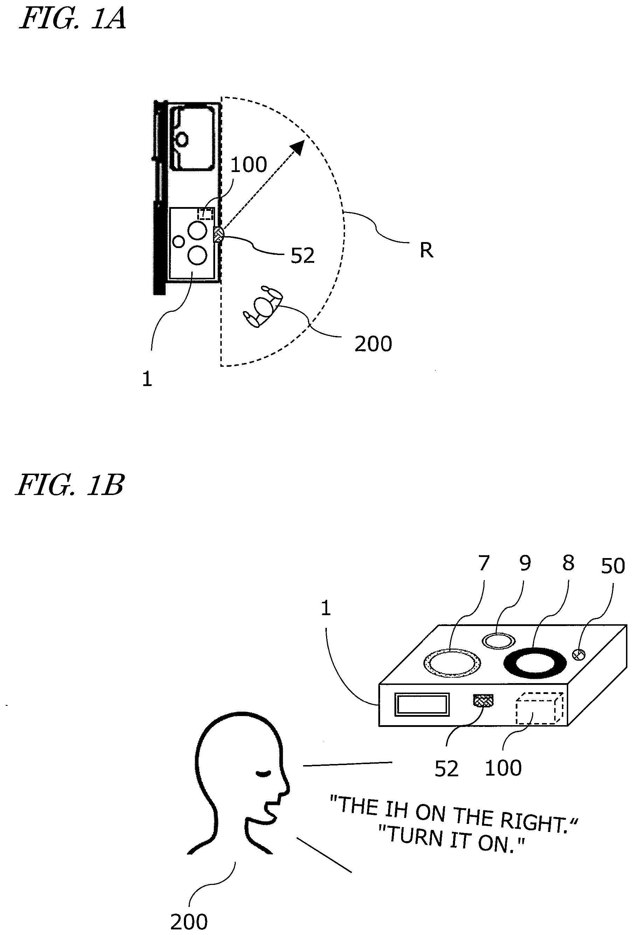

The overview of a controller according to an embodiment of the present disclosure will be described below with reference to Fig. 1A to Fig. 3C. In the following description of the embodiment, it is assumed that the heating device is a heating cooker. The heating cooker is, for example, an induction heating (IH) cooking heater that induction-heats a cooking container using electric power, or a gas cooker that heats a cooking container by combusting a gas. In the following, it is assumed that the heating cooker is an IH cooking heater.

Fig. 1A is a top diagram of kitchen equipment that has a heating cooker 1 incorporating therein a controller 100, disposed therein. The heating cooker 1 includes an IR sensor 52. The IR sensor 52 detects an IR ray radiated from a heat source present in a predetermined range R from the IR sensor 52. The controller 100 receives an output signal from the IR sensor 52 of the heating cooker 1 to determine whether any heat source is present. Typically, the "heat source" is a person and the "predetermined range R" is a range in which the IR sensor 52 can detect a heat source. The "predetermined range R" herein means a planar region having a semi-circular shape or a space having a semispherical shape of about 2 meters each centering the IR sensor 52. The words "the predetermined range from the IR sensor 52" herein have the same meaning as that of the words "the predetermined range from the disposition position of the heating cooker 1".

When the controller 100 receives an output signal of the IR sensor 52, the controller 100 determines presence or absence of any person in the predetermined range R from the disposition position of the heating cooker 1 based on the output signal. In Fig. 1A, a user 200 present in the predetermined range R is shown. At this time, the controller 100 enables the voice interface of the heating cooker 1. During the time period for the voice interface to be enabled, the controller 100 permits an operation for the heating cooker 1 by a voice command.

Fig. 1B shows a scene in which the user 200 utters a voice command in the state where the presence of the user 200 is detected in the predetermined range R. At this time, the controller 100 enables the voice interface. The user 200 utters a predetermined wake-up word and thereafter sequentially utters voice commands of "the IH on the right" and "turn it on". The speeches uttered by the user 200 are acquired by a microphone 50 of the heating cooker 1 and are sent to the controller 100. The controller 100 responds to the voice commands to instruct the heating cooker 1 to ignite a heating section 8 that corresponds to "the IH on the right" of heating sections 7 to 9 of the heating cooker 1. The user 200 can thereby operate the heating cooker 1 using the voice commands. The description for a pan or the like to essentially be placed on the heating cooker 1 has not been made for convenience.

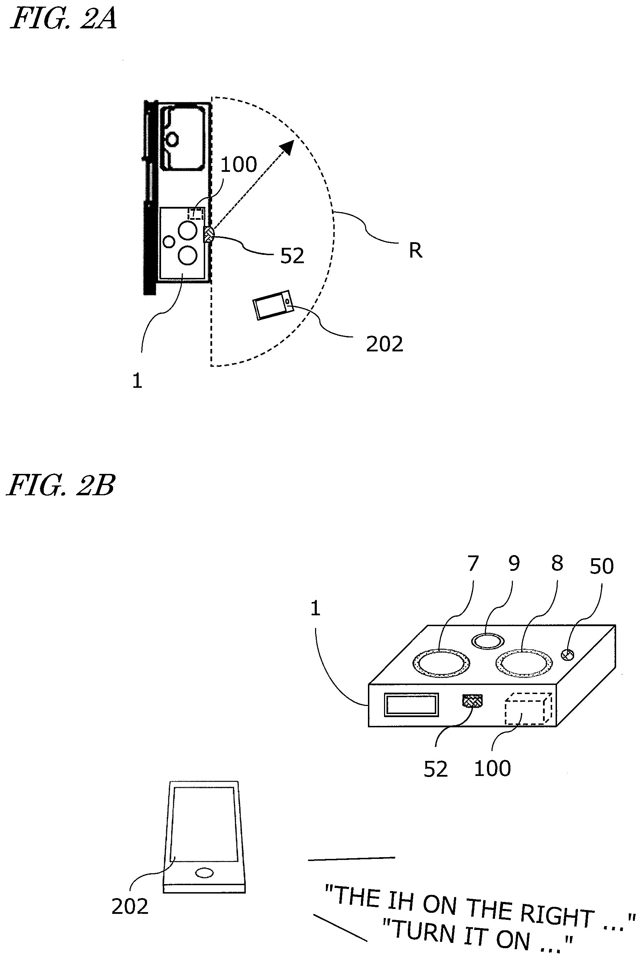

Fig. 2A and Fig. 2B each show a scene in which no person is present and only a smartphone 202 is placed in the predetermined range R from the disposition position of the heating cooker 1. Because no presence of any person is detected, the controller 100 disables the voice interface of the heating cooker 1. The controller 100 does not therefore permit any operation for the heating cooker 1 by any voice command even though a moving image or the like reproduced on the smartphone 202 happens to include the wake-up word as a speech and to further include the speeches of "the IH on the right" and "turn it on". Different from the example in Fig. 1B, the heating section 8 of the heating cooker 1 is not ignited.

In this manner, the controller 100 executes operations of: (a) sensing whether any person is present in the predetermined range R from the disposition position of the heating cooker 1; (b) enabling or disabling the voice interface of the heating cooker 1 in accordance with the sensing result; and (c) permitting an operation for the heating cooker 1 by the voice commands during the time period for the voice interface to be enabled. Even when a voice command is mistakenly recognized and the heating cooker 1 executes an operation not intended by the user 200 in the state where the voice interface is enabled, the user 200 can quickly approach the heating cooker 1 and can manually operate the heating cooker 1 to stop its operation.

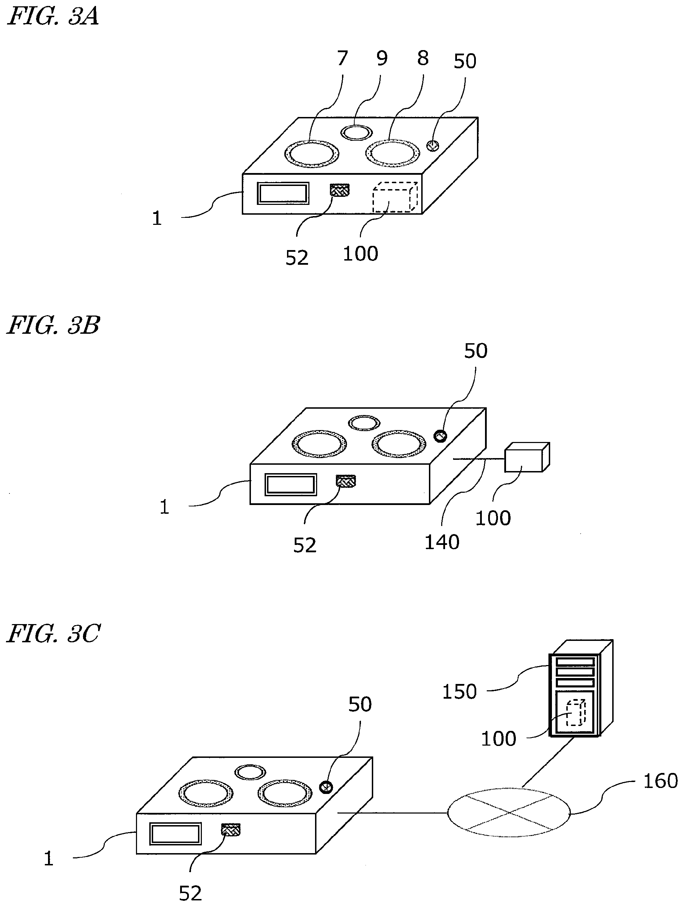

Fig. 3A shows the heating cooker 1 that incorporates therein the controller 100 of the present disclosure. In this embodiment, the heating cooker 1, which is an IH cooking heater, includes the heating sections 7 to 9 that are three IH heaters. The heating cooker 1 may include a grill that uses an IH heater or a heater as its heat source. The heating cooker 1 includes the IR sensor 52 to detect presence of any person and the microphone 50 that acquires speeches of the user 200 for speech recognition.

As to the IR sensor 52, a sensor having sensitivity for, for example, wavelengths in the vicinity of 10 µm, in which the energy peak of the radiation of the human is present can be employed. For example, a pyroelectric IR human sensor may be used or, for example, an IR CCD camera capable of outputting a thermal image with 320×240 pixels is also usable as the IR sensor 52. The sensor output signal is an analog signal while the sensor output signal is converted by an A/D convertor not shown in the heating cooker 1 into a digital signal and is transmitted to the controller 100.

The controller 100 is connected to the heating cooker 1 inside the heating cooker 1, to receive the output signal from the IR sensor 52 and a speech signal from the microphone 50. The above operations (a) to (c) can thereby be implemented. Hereinafter, the output signal from the IR sensor 52 may herein be referred to as "sensor output signal".

The controller 100 is incorporated in the heating cooker 1 in Fig. 3A while other examples of the configuration of the above can be considered. Fig. 3B shows an example of the configuration for the controller 100 and the heating cooker 1 to each be included in a separate housing and to be connected to each other through a communications line 140. The controller 100 receives the sensor output signal and the speech signal from the microphone 50 through the communications line 140. The controller 100 enables or disables the voice interface based on the sensor output signal. During the time period for the voice interface to be enabled, the controller 100 executes a speech recognition process and transmits a control signal to cause the heating cooker 1 to operate in accordance with the recognition result, to the heating cooker 1 through the communications line 140. During the time period for the voice interface to be disabled, the controller 100 stops the speech recognition process.

Fig. 3C shows an example of the configuration for the controller 100 to be installed in a server device 150. In other words, the server device 150 has the above functions of the controller 100. The server device 150 can receive the sensor output signal and the speech signal from the microphone 50 through a communications network 160.

The above operations can be implemented by any one of the above configurations. The operations of sensing presence or absence of any person, the speech recognition, and the production and output for the control signal do not need to be executed in the one controller 100. For example, the controller 100 in Fig. 3A may execute the operation of sensing presence or absence of any person, an external server device may execute the speech recognition process, and the controller 100 may receive the speech recognition result. The controller 100 only has to transmit the control signal to the heating cooker 1 in accordance with the recognition result by the server device. For example, in the configuration in Fig. 3B, the communication between the heating cooker 1 and the controller 100 may be realized not by wire but by radio. In the configuration in Fig. 3C, at least a portion of the communication between the heating cooker 1 and the communications network 160 may be executed by radio.

The communication by wire and the communication by radio as above can be executed in accordance with a known communications standard. For example, the communication by wire can be executed complying with the Ethernet (a registered trademark) standard, the USB (a registered trademark) standard, or the like. The communication by radio can be executed complying with the IEEE 802.11 standard relating to a local area network (LAN), the fourth generation/fifth generation mobile communications system relating to the mobile communications and referred to as what-is-called 4G/5G, or the like.

### (2)Details

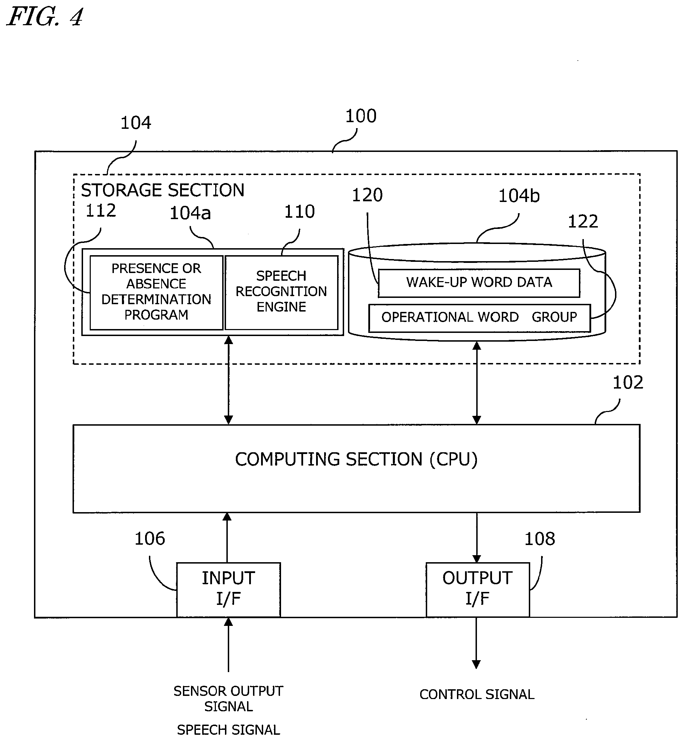

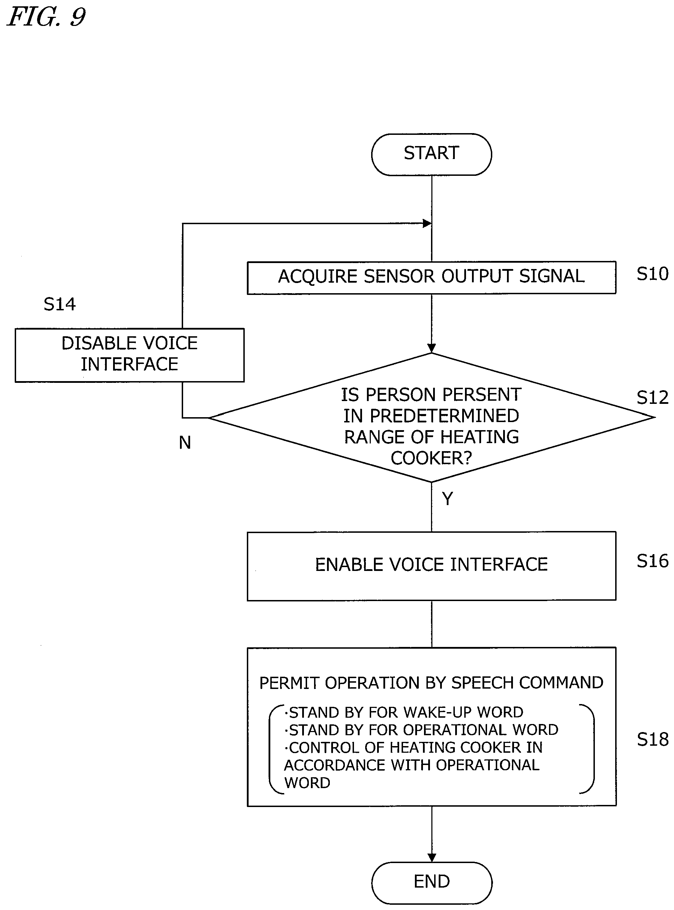

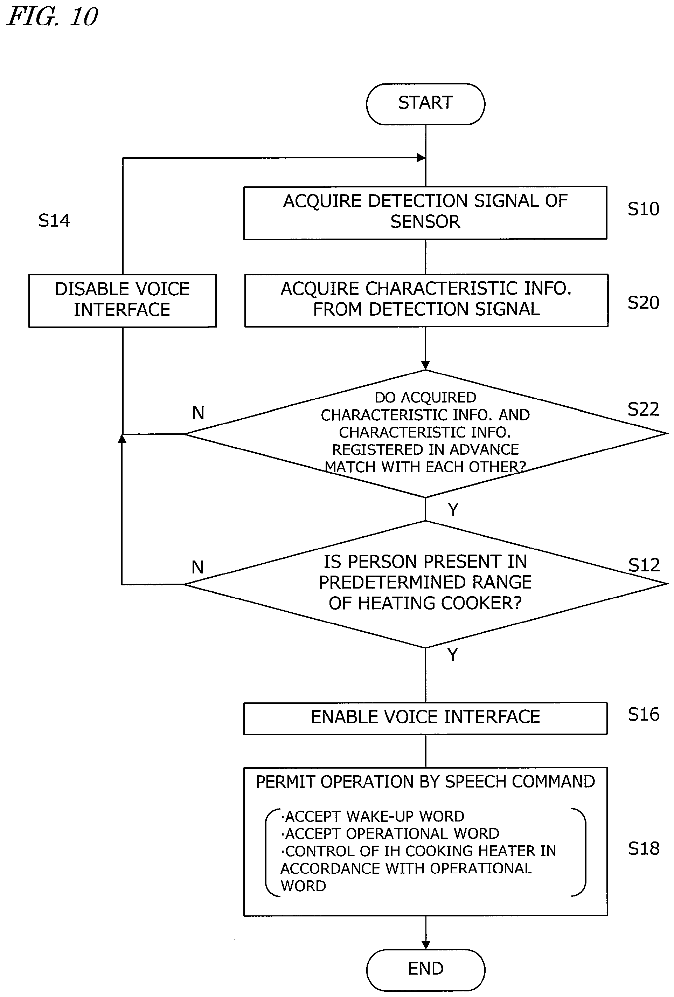

The configuration of each of the controller 100 and the heating cooker 1 will be described below with reference to Fig. 4 to Fig. 8. The operation of the controller 100 will thereafter be described with reference to Fig. 9 and Fig. 10. In the following description, the description will be made according to the example of the configuration shown in Fig. 3A.

### <<Controller>>

Fig. 4 is a hardware configuration diagram of the controller 100.

The controller 100 includes a computing section 102, a storage section 104, an input interface (I/F) 106, and an output interface (I/F) 108.

The computing section 102 is a computing circuit that executes the operations described later, and includes a signal processing circuit such as, for example, a CPU or a microcontroller (a microcomputer).

The storage section 104 is one or plural storing device(s) each capable of writing and reading of data. One example of the storing device is a ROM, a RAM, a flash memory, a hard disc drive, or an SSD. In this embodiment, the storage section 104 includes a RAM 104a and a flash memory 104b.

The input I/F 106 and the output I/F 108 are connected to an internal bus not shown of the heating cooker 1. The input I/F 106 receives the sensor output signal and the speech signal output from the microphone 50 of the heating cooker 1. The output I/F 108 outputs the control signal to a control section of the heating cooker 1 described later.

The storage section 104 will be described below in more detail.

The RAM 104a retains therein a computer program to be executed by the computing section 102. In this embodiment, the RAM 104a retains therein a speech recognition engine 110 and a presence or absence determination program 112. The computing section 102 executes the speech recognition engine 110 and can thereby recognize the words uttered by the user 200 included in the speech signal received through the input I/F 106. An optional existing speech recognition technique can be utilized in the recognition process executed by the speech recognition engine 110. The detailed content of the speech recognition technique will not be described.

The computing section 102 executes the presence or absence determination program 112 and thereby detects the presence or the absence of any person from the sensor output signal. In the case, for example, where the IR sensor 52 is a current collector IR human detecting sensor, the presence or absence determination program 112 includes an operation of determining whether the sensor output signal exceeds a predetermined threshold value. In the case where the sensor output signal exceeds the predetermined threshold value, it is determined that a person is present. In the case where the IR sensor 52 is an IR CCD camera capable of outputting a thermal image, the presence or absence determination program 112 includes an operation of determining whether a shape pattern of a person is included in the thermal image. In the case where the shape pattern of a person is included therein, it is determined that a person is present.

The flash memory 104b stores therein wake-up word data 120 and operational word group 122. The wake-up word data 120 indicates the wake-up word. The wake-up word may be a fixed word or may be changeable by the user.

Each wake-up word is correlated with a control command. The control command is an order that indicates which heating section is to be operated by the voice command. The control section 31 of the heating cooker 1 executes the operation(s) on the heating section designated by the control command as the target of operation.

At the time of the shipment of the heating cooker 1 or the controller 100, a default value of each wake-up word is set therein. An optional wake-up word is changeable by the user 200. When one or plural wake-up word(s) is/are changed, the existing wake-up word(s) is/are rewritten into the wake-up word(s) after the change in the flash memory 104b by the control of the computing section 102. The control commands are not rewritten.

The operational word group 122 is a set of various operational words. Table 1 shows one example of the operational word group 122.

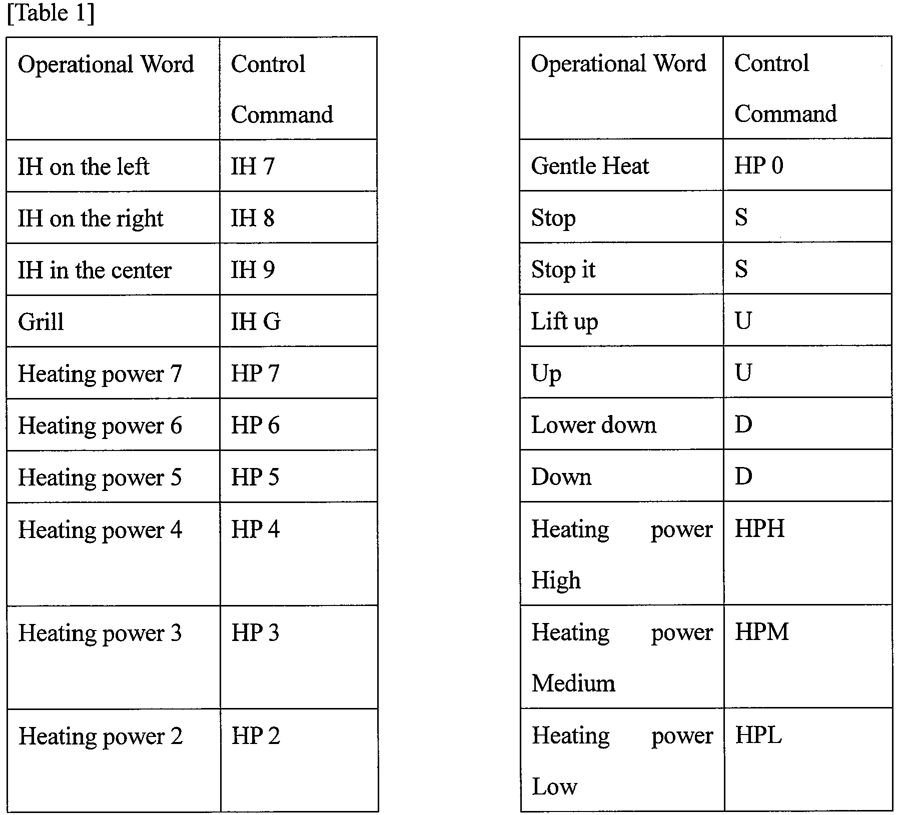

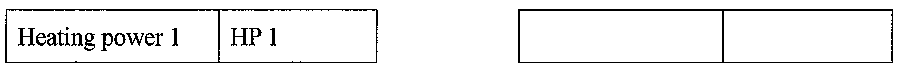

Each of the operational words is correlated with a control command. The control command is an order indicating what operation is executed. The control section 31 of the heating cooker 1 executes the operation designated by the control command for the heating section designated thereby.

The computing section 102 uses the speech recognition engine 110, the wake-up word data 120, and the operational word group 122 that are described above, can thereby recognize whether any wake-up word is included in a speech uttered by the user 200, and, in the case where a wake-up word is included therein, can recognize which heating section the wake-up word corresponds to. The computing section 102 also thereafter continues the speech recognition, can thereby recognize whether any operational word is included in a speech uttered by the user 200, and, in the case where an operational word is included therein, can recognize what operational word the operational word is.

### <<Heating cooker>>

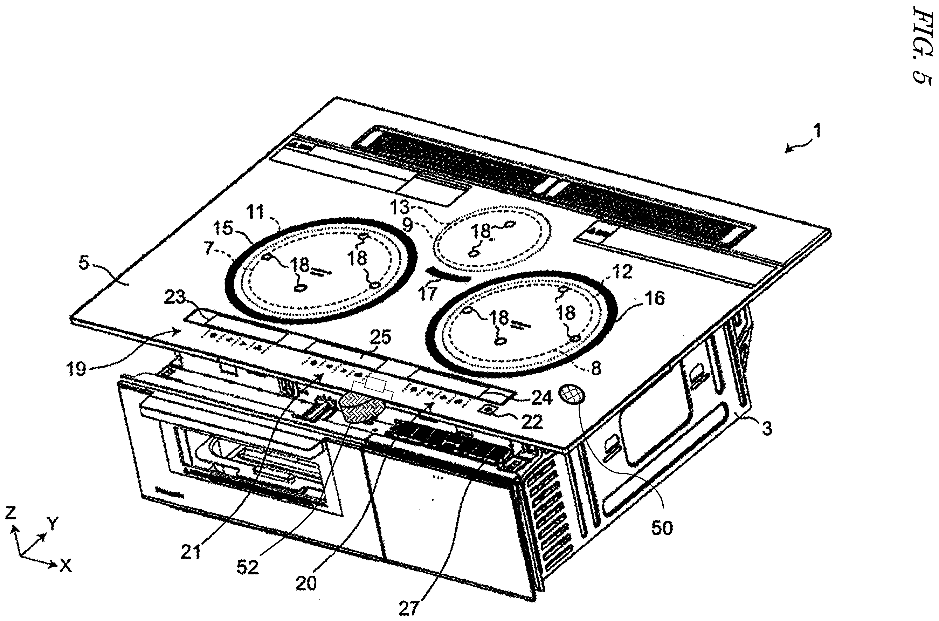

An induction heating cooker according to the embodiment of the present disclosure will be described below with reference to Fig. 5 to Fig. 8.

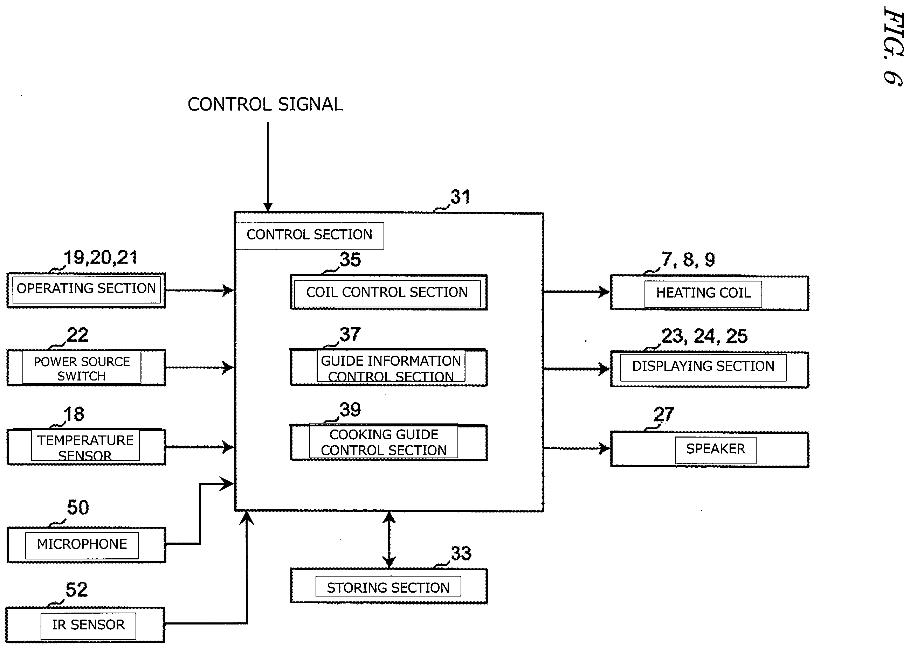

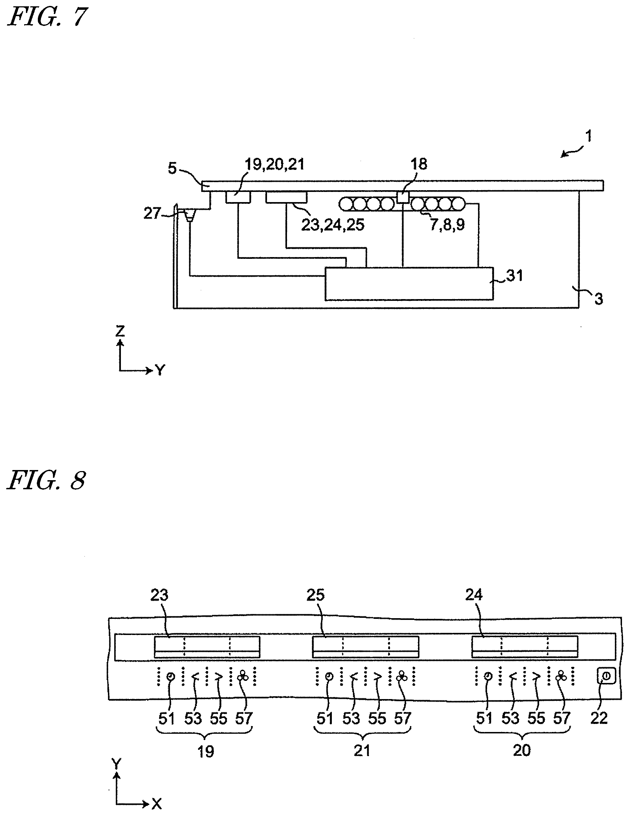

Fig. 5 is a perspective diagram of the induction heating cooker 1 according to the exemplary embodiment. Fig. 6 is a block diagram showing a control system of the induction heating cooker 1 according to the embodiment. Fig. 7 is a schematic diagram of the configuration of the induction heating cooker 1.

In some of the drawings according to the present discloser, an X-axis, a Y-axis, and/or a Z-axis are shown. When a user faces the induction heating cooker when he or she uses the induction heating cooker, the X-axis direction indicates the width direction (the longitudinal direction) of the heating cooker, the Y-axis direction indicates the depth direction (the transverse direction), and the Z-direction indicates the height direction. It is assumed that the positive direction of the X-axis is the rightward direction and the negative direction thereof is the leftward direction. It is also assumed that the positive direction of the Y-axis is the backward direction and the negative direction thereof is the frontward direction.

### <<Induction Heating Cooker>>

A common configuration of the induction heating cooker 1 according to the present disclosure will first be described. The IR sensor 52 has already been described and will therefore not again be described.

As shown in Fig. 6, the induction heating cooker 1 includes a main body 3 and a top plate 5 that is disposed on the upper face of the main body 3, to have a container placed thereon. The container holds therein a container to be heated that holds therein cooking ingredients to be cooked such as, for example, a stew.

In the inside of the main body 3 of the induction heating cooker 1, more precisely, at positions on the lower side (the -Z side) of container placing areas of the top plate 5 of the induction heating cooker 1, heating coils 7, 8, and 9 are disposed. The heating coils 7 to 9 each generate an inductive magnetic field to induction-heat a container. The induction heating cooker 1 includes the three heating coils 7 to 9 while the induction heating cooker 1 may include one, two, or four or more heating coil(s).

In the induction heating cooker 1, operation sections 19, 20, and 21 that each are physically operable to operate, for example, respectively the heating coils 7, 8, and 9 are disposed. The heating coils 7, 8, and 9 "correspond" respectively to the operation sections 19, 20, and 21. As above, the elements disposed respectively for the heating coils 7, 8, and 9 are herein referred to as elements that "correspond" to the heating coils.

As shown in Fig. 5, on the top plate 5 on the upper side (the +Z side) of the heating coils 7 to 9, ring-shaped markers 11, 12, and 13 each indicating the container placing area are printed "corresponding" respectively to the heating coils 7, 8, and 9.

In the top view, light emitting sections 15 and 16 each emitting light in a ring shape are disposed on the outer side respectively of the heating coils 7 and 8 on the top plate 5. An arc-shaped light emitting section 17 is disposed on the front side (the -Y side) of the heating coil 9 on the top plate 5. The light emitting sections 15 to 17 each emit light when, for example, an electric current flows through one of the heating coils 7 to 9 that corresponds thereto. The light emitting sections 15 to 17 each include, for example, an LED light emitting substrate not shown.

A temperature sensor 18 is disposed on the lower side of the top plate 5 and on the inner side of each of the markers 11 to 13. A detection value detected by the temperature sensor 18 is sent to the control section 31. The control section 31 adjusts the amount of an electric current flowing through each of the heating coils 7 to 9 referring to the detection value of the temperature, and determines the timing of providing an assistance guide of the cooking method.

The operation sections 19, 20, and 21 are disposed on the front side (the -Y side) of the top plate 5 of the induction heating cooker 1. The operation sections 19, 20, and 21 are used by the user to operate respectively the heating coils 7 to 9. The operation section 19 is disposed to operate the heating coil 7, the operation section 20 is disposed to operate the heating coil 8, and the operation section 21 is disposed to operate the heating coil 9. The operation section 19 herein corresponds to the heating coil 7, the operation section 20 herein corresponds to the heating coil 8, and the operation section 21 herein corresponds to the heating coil 9.

Displaying sections 23, 24, and 25 are disposed on the front side of the top plate 5 of the induction heating cooker 1 and between the heating coils 7 to 9 and the operation sections 19 to 21. The displaying sections 23, 24, and 25 display the states of those to be operated respectively by the operation sections 19 to 21. The operations of the displaying sections 23 to 25 are controlled by the control section 31 described later.

The displaying sections 23 to 25 each include, for example, a matrix dot liquid crystal displaying device. The matrix dot liquid crystal displaying device is, for example, a full dot liquid crystal displaying panel that has a belt-like shape extending in the width direction of the top plate 5.

The displaying sections 23 to 25 display the states of those to be operated, the contents of the operations of the heating coils 7 to 9, and the like, using picture objects. For example, the displaying section 23 displays thereon the content of the operation of the heating coil 7, the displaying section 24 displays thereon the content of the operation of the heating coil 8, and the displaying section 25 displays thereon the content of the operation of the heating coil 9.

An image object is a letter(s) and/or an image(s). For example, the image object is letters that are "heating". At this time, it is indicated thereby that the induction heating cooker 1 can execute a heating operation using one of the heating coils 7 to 9 that corresponds to the one of the displaying sections 23 to 25. The displaying sections 23 to 25 may each display thereon an image object of the letters of "start" that indicate the start of the heating, together with the letters of "heating". After the heating is started, the displaying sections 23 to 25 may display thereon image objects such as the number indicating the magnitude of the heating amount (the heating power) of each of the heating coils 7 to 9, and an icon.

The displaying sections 23 to 25 may each be a segment display liquid crystal displaying device. The letters and/or images each displayed thereon using one or plural segment(s) are in the category of the above image object.

The main body 3 includes a speaker 27 that outputs, using a speech, the information relating to the heating of the heating coils 7 to 9. The speaker 27 is disposed on the front face side of the induction heating cooker 1 and outputs a guide by a speech to the user.

As shown in Fig. 6, the induction heating cooker 1 includes the control section 31 and the storage section 33, inside the main body 3. The control section 31 includes a signal processing circuit such as, for example, a CPU, or a microcontroller (a microcomputer). The storage section 33 is a storing device such as a ROM, a RAM, a hard disc drive, or an SSD. The storage section 33 stores therein a computer program to cause the induction heating cooker 1 to operate. The control section 31 is configured to achieve various functions described later by executing the computer programs.

Executing the computer program, the control section 31 functions as a coil control section 35 that controls the amount of the electric current to be caused to flow through each of the heating coils 7 to 9, a guide information control section 37 that controls the displaying area of each of the displaying sections 23 to 25, a guide information control section 45 that controls the display output of the guide information, and a cooking guide control section 47 that controls the information output of the cooking guide, depending on the moment. Some or all of the coil control section 35, the guide information control section 37, and the cooking guide control section 47 may not be implemented as software, and may be configured by one or plural CPU(s), microprocessor(s), or FPGA(s).

Output signals of the operation sections 19 to 21 are input into the control section 31. The control section 31 sets the heating amount and the like of each of the heating coils 7 to 9 in accordance with an operation. In accordance with an operational instruction of the operation section 19, the control section 31 functioning as the coil control section 35 controls the start or the stop of the heating by the heating coil 7. The coil control section 35 executes the heating of the container placed on the top plate 5 by supplying a high frequency current to each of the heating coils 7 to 9. The coil control section 35 controls the heating amount from each of the heating coils 7 to 9 by controlling the amount of the current caused to flow through each of the heating coils 7 to 9. Output signals of the operation sections 19 to 21 are already input into the control section 31 and are therefore used also for controlling the operations of the control section 31 functioning as the guide information control section 37 and the cooking guide control section 39.

The cooking guide control section 39 sends cooking guide information to the guide information control section 37 at the timing at which proper conditions are established, following a heating sequence or a cooking sequence determined in advance. The proper conditions are the condition such as whether the temperature detected by the temperature sensor 18 satisfies the temperature condition determined in advance or whether a time period determined in advance elapses after the detected temperature reaches the temperature determined in advance. These conditions are set for each of assistance menus that guide the cooking. When the cooking guide control section 39 determines that these conditions are satisfied, the cooking guide control section 39 instructs the guide information control section 37 to display the cooking guide that corresponds to the conditions, from the displaying sections 23 to 25. The heating sequence, the cooking sequence, and the cooking guide are stored in the storage section 33.

When the control section 31 receives the control signal, the control section 31 analyzes the control command included in the control signal. When the controller 100 recognizes an operational word after recognizing a wake-up word, the controller 100 designates the heating section to be operated by the control command and designates the operation content thereof.

### <<Displaying Section and Operation Section>>

The displaying sections 23 to 25 and the operation sections 19 to 21 will be described next with reference to Fig. 8. The operation sections 19 to 21 each include a first operation section 51, a second operation section 53, a third operation section 55, and a fourth operation section 57. The first operation section 51 to the fourth operation section 57 may each be, for example, a touch switch that includes a capacitance switch, or a pushbutton switch. The first operation section 51 to the fourth operation section 57 each set a heating operation of the corresponding one of the heating coils 7 to 9. The first operation section 51 has a design of a clock printed thereon and is used mainly to select a timer setting. The second operation section 53 and the third operation section 55 each have a design of an arrow such as, for example, a symbol of "<" or ">", printed thereon, and are used mainly to select a menu and set a heating power amount and a time period of a timer. The fourth operation section 57 has a design indicating a heating area that corresponds to the operation section printed thereon, and functions as a multi-functional switch to which a different function is assigned depending on the situation. A power source switch 22 has a function of turning on the power source of the induction heating cooker 1. The power source switch 22 may further have a function of turning off the power source of the induction heating cooker 1. A switch to turn off the power source may be disposed separate from the switch 22.

### <<Operation of Controller>>

Fig. 9 is a flowchart showing a procedure for an operation executed by the computing section 102 of the controller 100.

At step S10, the computing section 102 acquires the sensor output signal from the IR sensor 52 of the heating cooker 1.

At step S12, the computing section 102 determines whether any person is present in the predetermined range R from the position at which the heating cooker 1 is disposed. In the case where it is determined that no person is present, the operation advances to step S14 and, in the case where it is determined that a person is present, the operation advances to step S16.

At step S14, the computing section 102 disables the voice interface. Various methods can be considered to "disable". The methods include, for example, to stop the operation of the microphone 50 of the heating cooker 1, to acquire a speech signal using the microphone 50 and to stop, by the controller 100, the acquisition of the speech signal, and to acquire the speech signal by the controller 100 and to stop the analysis thereof.

At step S16, the computing section 102 enables the voice interface. The computing section 102 switches its operation to an operation in which a speech signal output from the microphone 50 can be acquired and in which the analysis of the speech signal can be executed.

At step S18, the computing section 102 permits the operation by the voice command. For example, the computing section 102 moves into a standby mode to accept the wake-up word and, after detecting the wake-up word, stands by for an operational word. In the case where the computing section 102 accepts the operational word, the computing section 102 executes control of the heating cooker 1 in accordance with the operational word.

### (Second Embodiment)

In this embodiment, the voice interface is enabled in the case where the fact that a person is present in the predetermined range R from the position at which the heating cooker 1 is disposed and the fact that the user of the heating cooker 1 is authenticated as a user registered in advance are both achieved. The user capable of operating the heating cooker 1 can more appropriately supervise the operation of the heating cooker 1 by including the authentication. For example, even in the case where a child, a pet, or the like is recognized as a person by the IR sensor 52 and, when the voice interface is used, a voice command is mistakenly recognized and the heating cooker 1 executes an unintended operation, the user can directly operate the heating cooker 1 and stop the operation thereof.

Fig. 10 is a flowchart showing a procedure for an operation according to an exemplary second embodiment of the present disclosure. In Fig. 10, the same operation(s) as those in Fig. 9 are given the same reference numeral and will not again be described.

At step S20 following step S10, the computing section 102 acquires characteristic information from the detection signal. The characteristic information refers to information that indicates the characteristic with which each individual user can be distinguished. Various types of the "characteristic" can be considered. For example, the characteristic can be at least one selected from a voiceprint, a fingerprint, a face image, a vein pattern, an iris pattern, a body height, and a behavior pattern. In the case where the characteristic is, for example, a voiceprint, the computing section 102 determines the speech signal of the user detected at the microphone 50 as the detection signal, and acquires the voiceprint from the detection signal. In the case where the characteristic is a fingerprint, the computing section 102 determines an output signal of a fingerprint sensor not shown as the detection signal, and acquires the fingerprint therefrom. In the case where the characteristic is any one of a face image, a vein pattern, an iris pattern, and a body height, a detection signal is used, of an imaging device that has the sensitivity or the viewing field capable of detecting each of the above. In the case where the characteristic is a behavior pattern, for example, an operation history of the heating cooker 1 of the user for a specific time period is usable.

At step S22, the computing section 102 determines whether the acquired characteristic information and the characteristic information registered in advance match with each other. As a precondition for this determination operation, a characteristic of the same type as that of the characteristic acquired at step S20 is registered in advance in the controller 100. It can be considered, for example, that the characteristic information of the user capable of operating the heating cooker 1 is registered therein in advance.

As above, in this embodiment, in order to determine whether the voice interface is enabled or disabled, the operations of: acquiring the characteristic information of the person; authenticating the person as the user, using the acquired characteristic information of the person and the characteristic information of the user registered in advance; and detecting the presence of the person are executed. In the case where the authentication are successfully completed and the presence of the person is detected, the voice interface is enabled.

As to the sequential order, the operation at step S12 can be determined being independently from the operation at step S20. For example, the operation at step S12 may be executed before or after the operation at step S20. Otherwise, the operation at step S12 may be executed in parallel with the operation at step S20. The operation at step S12 can be determined also independently from the operation at step S22. Step S22 only has to be executed after step S20.

### (3)Modification Example

A modification example will be described below.

The predetermined range R has been described as an example of the range for the IR sensor 52 to be able to detect a heat source in the above description while the predetermined range R may be determined by adjusting or limiting the detectable range of the sensor.

The result of the detection by the IR sensor 52 is used to detect the presence or the absence of any person in the predetermined range R in the above embodiments while the presence or the absence of any person may be detected using an output result of another sensor. Examples of the output result of another sensor include, for example, an output of a contact sensor capable of sensing contact of a person, a recognition result of an image acquired by an image sensor, a recognition result of a speech acquired by a microphone, a recognition result of a thermal image acquired by an IR sensor, and/or an output of a vital sign acquired by a biometric sensor. The sensing of contact of a person includes, for example, detection of an operation executed by the heating cooker 1, detection by a contact sensor disposed on the top plate, and detection by pressing down a foot switch. Examples of the contact sensor can include, for example, a capacitance sensor that detects a variation of capacitance. These sensors can each be disposed limiting the distance thereof from the heating cooker 1 to the predetermined range R or shorter. As to the recognition result of a speech acquired by a microphone, for example, it can be determined that a person is present in the predetermined range R when the amplitude of the acquired speech signal is equal to or larger than a predetermined value, and it can be determined that no person is present in the predetermined range R when the amplitude thereof is smaller than the predetermined value.

Especially, when the recognition result of a speech acquired by a microphone is excluded and any output result other than that is used as the output result of the other sensor as above, the possibility that the authentication is successfully completed by mistakenly recognizing the speech can be excluded.

It is preferred that a person be present in the vicinity of the heating cooker 1 during any heating cooking executed using the heating cooker 1. Even in the state where the voice interface is enabled, the controller 100 consecutively executes the operation of detecting a person at intervals of a predetermined time period such as, for example, every 5 seconds. In the case where the presence of the person stops to be sensed after a heating operation is started, the computing section 102 of the controller 100 may output a control signal to stop the heating operation. At this time, the enabled voice interface is disabled. Otherwise, after the presence of the person stops to be sensed, the computing section 102 may output the control signal to stop the heating operation after a time period determined in advance elapses. The operator of the heating cooker 1 can be permitted to temporarily leave the heating cooker 1.

When the computing section 102 outputs the control signal to stop the heating operation, the computing section 102 may store, in the storage section 104 of the computing section 102 or the storage section 33 of the heating cooker 1, the information of the operation conditions of the heating operation. The information of the operation conditions is, for example, information to identify the heating section executing the heating operation, information to identify the value of the heating power, and the like.

In the case where the person comes back and the presence of the person is again detected after stopping the heating operation, the computing section 102 may automatically resume the heating operation using the stored information of the operation conditions. High convenience can be presented to the user because the heating operation is automatically stopped when no person is present, and the heating operation is resumed under the same conditions when the person comes back. Instead of automatically resuming the heating operation, the computing section 102 may receive, from the user, an instruction as to whether the heating operation is resumed using the stored operation conditions. The computing section 102 can cause any one of the displaying sections 23 to 25 of the heating cooker 1 that corresponds to the heating section executing the heating to display thereon a message, and can determine whether the heating is resumed based on inputs into the operating sections 19 to 21.

The user may want to know whether the voice interface is enabled or disabled. The fact that the voice interface is enabled and/or disabled may therefore be informed of to the user through the displaying sections 23 to 25 or the speaker 27.

The embodiments of the induction heating cooker 1 according to the present disclosure have been described as above. The operations based on the above flowcharts are implemented as the operations of the control section 31 by the computer program. The computer program can be stored in the storage section 33 and executed by the control section 31.

### INDUSTRIAL APPLICABILITY

An exemplary controller of the present disclosure is applicable to a use of operating a heating cooker using a voice command.

### REFERENCE SIGNS LIST

- 1: heating cooker
- 3: main body
- 5: top plate
- 7, 8, 9: heating coil
- 11, 12, 13: marker
- 15, 16, 17: light emitting section
- 18: temperature sensor
- 19, 20, 21: operation input section
- 22: power source switch
- 23, 24, 25: displaying section
- 27: speaker
- 31: control section
- 33: storage section
- 50: microphone
- 100: controller
- 102: computing section
- 104: storage section
- 106: input interface (input I/F)
- 108: output interface (output I/F)
- 150: server device
- 160: communications network

## Claims

1. A method for activating a voice interface to operate a heating device using a voice command, the heating device (1) having a microphone (50) that acquires user speech signals for speech recognition, the method comprising operations of:
(a) sensing whether any person is present in a predetermined range from a disposition position of the heating device (1);
(b) enabling or disabling the voice interface in accordance with a sensing result of the operation (a); and
(c) permitting an operation of the heating device by the voice command during a time period for the voice interface to be enabled by the operation (b), by moving into a standby mode to accept a wake-up word, and, after detecting the wake-up word, standing by for an operational word, and, in a case of accepting the operational word, executing control of the heating device in accordance with the operational word, wherein in operation (b), disabling the voice interface is to stop the operation of the microphone (50), and
in operation (c), permitting an operation of the heating device (1) includes an operation to start heating when heating is not executed in the heating device (1).

2. The method according to claim 1, wherein
characteristic information of a user who is permitted to operate the heating device (1) by the voice interface is registered in advance, and wherein
the operation (b) comprises operations of:
(b1) in a case where presence of a person is sensed by the operation (a), acquiring characteristic information of the person whose presence is sensed;
(b2) authenticating the person as the user, using the characteristic information of the person acquired in the operation (b1) and the characteristic information of the user registered in advance; and
(b3), in a case where the authentication is successfully completed by the operation (b2), enabling the voice interface.

3. The method according to claim 2, wherein
the pieces of characteristic information each are biometric information, and wherein
the operation (b2) is executed using at least one selected from a voiceprint, a fingerprint, a face image, a vein pattern, an iris pattern, and a behavior pattern as each of the pieces of characteristic information.

4. The method according to any one of claims 1 to 3, wherein
the sensing as to whether a person is present in the operation (a) is executed using an output result of a sensor, and wherein
the output result of the sensor is:
a recognition result of a speech acquired by a microphone (50), and/or
an output result other than a recognition result of a speech, such as an output of a contact sensor capable of sensing contact of a person, a recognition result of an image acquired by an image sensor, a recognition result of a thermal image acquired by an IR sensor, and/or an output of a vital sign acquired by a biometric sensor.

5. The method according to claim 4, wherein
the predetermined range in the operation (a) is determined by adjusting a detectable range of the sensor.

6. The method according to any one of claims 1 to 5, wherein
the operation (a) is also executed after the operation for the heating device (1) is accepted by the operation (c), and wherein
when the presence of the person is not sensed by the operation (a) after a heating operation using the heating device is started, the heating operation is stopped, preferably after a time period determined in advance elapses.

7. The method according to claim 6, wherein
operation conditions of the heating operation are stored when the heating operation is stopped.

8. The method according to claim 7, wherein
in a case where the operation (a) to the operation (c) are executed and the voice interface is again enabled after the heating operation is stopped,
the heating operation is resumed using the stored operation conditions, or
an instruction as to whether the heating operation is resumed using the stored operation conditions is received.

9. The method according to any one of claims 1 to 8, wherein
the operation (b) further comprises informing of the fact that the voice interface is enabled and/or disabled.

10. The method according to any one of claims 1 to 9, wherein
the heating device (1) comprises an operation section that is capable of being physically operated by the user, and wherein
an operation for the operation section is accepted regardless of whether the voice interface is enabled or disabled.

11. A computer program comprising instructions which, when the program is executed by a computing section, cause the computing section to execute the method for operation according to any one of claims 1 to 10.

12. A controller that controls an activation of a voice interface to operate a heating device (1) using a voice command, the heating device having a microphone (50) that acquires user speech signals for speech recognition,
the controller comprising:
a communications interface that is configured to receive an output of a sensor disposed to be able to detect an inside of a predetermined range from a disposition position of the heating device (1); and
a computing section (102), wherein
the computing section (102) is configured to execute:
(a) sensing whether any person is present in the predetermined range based on the received output of the sensor;
(b) enabling or disabling the voice interface in accordance with a sensing result of the operation (a), and
(c) permitting an operation of the heating device by the voice command during a time period for the voice interface to be enabled by the operation (b), wherein the computing section (102) is configured to move into a standby mode to accept a wake-up word and is configured to stand by for an operational word after detecting the wake-up word, and is configured to execute control of the heating device (1) in accordance with the operational word in a case where the computing section (102) accepts the operational word,
wherein in operation (b), disabling the voice interface is to stop the operation of the microphone (50), and
in operation (c), permitting an operation of the heating device includes an operation to start heating when heating is not executed in the heating device (1).

13. The controller according to claim 12, wherein
the controller is installed in the heating device.

14. The controller according to claim 12, wherein
the controller is installed in a server device that is communicably connected to the sensor and the heating device.

## Patentansprüche

1. Verfahren zur Aktivierung einer Sprachschnittstelle zur Bedienung eines Erwärmungsgeräts mittels Sprachbefehl, wobei das Erwärmungsgerät (1) ein Mikrofon (50) aufweist; wobei das Verfahren folgende Betriebsvorgänge umfasst:
a) Erfassung, ob sich eine Person in einem vorbestimmten Bereich um die Aufstellungsposition des Erwärmungsgeräts (1) befindet;
b) Aktivieren oder Deaktivieren der Sprachschnittstelle entsprechend dem Ergebnis der Erfassung des Vorgangs (a); und
(c) Ermöglichung des Betriebs des Erwärmungsgeräts per Sprachbefehl während eines Zeitraums, in dem die Sprachschnittstelle durch den Vorgang (b) aktiviert wird, indem in einen Standby-Modus gewechselt wird, um ein Aktivierungswort zu empfangen, und nach Erfassung des Aktivierungsworts auf ein Bedienwort gewartet wird, und im Falle des Empfangs des Bedienworts die Steuerung des Erwärmungsgeräts gemäß dem Bedienwort ausgeführt wird,
wobei
beim Vorgang (b) durch Deaktivierung der Sprachschnittstelle der Betrieb des Mikrofons (50) gestoppt wird, und
beim Vorgang (c) das Ermöglichen des Betriebs der Erwärmungsgerät (1) auch einen Vorgang zum Starten der Erwärmung umfasst, wenn in dem Erwärmungsgerät (1) keine Erwärmung ausgeführt wird.

2. Verfahren nach Anspruch 1, wobei
charakteristische Informationen über einen Benutzer, der berechtigt ist, das Erwärmungsgerät (1) über die Sprachschnittstelle zu bedienen, im Voraus registriert werden, wobei
der Vorgang (b) folgende Vorgänge umfasst:
(b1) im Falle, dass der Vorgang (a) die Anwesenheit einer Person wahrnimmt, das Erfassen charakteristischer Informationen über die Person, deren Anwesenheit wahrgenommen wird;
b2) Authentifizierung der Person als Benutzer unter Verwendung der im Rahmen des Vorgangs (b1) erfassten charakteristischen Informationen der Person und der zuvor registrierten charakteristischen Informationen des Benutzers; und
(b3), Aktivierung der Sprachschnittstelle, falls die Authentifizierung durch den Vorgang (b2) erfolgreich abgeschlossen wird.

3. Verfahren nach Anspruch 2, wobei
die einzelnen charakteristischen Informationen jeweils biometrische Informationen sind, und wobei
der Vorgang (b2) unter Verwendung mindestens eines der folgenden Merkmale ausgeführt wird: Stimmabdruck, Fingerabdruck, Gesichtsbild, Venenmuster, Iris-Muster und Verhaltensmuster.

4. Verfahren nach einem der Ansprüche 1 bis 3, wobei
die Erfassung, ob sich eine Person im Vorgang (a) befindet, mittels eines Ausgabewertes eines Sensors erfolgt, wobei
das Ausgaberesultat des Sensors ist:
ein Erkennungsergebnis eines von einem Mikrofon aufgenommenen Sprechens (50) und/oder
ein Ausgaberesultat, das nicht das Erkennungsergebnis eines Sprechens ist, wie beispielsweise die Ausgabe eines Kontaktsensors, der in der Lage ist, den Kontakt einer Person zu erfassen, das Erkennungsergebnis eines von einem Bildsensor aufgenommenen Bildes, das Erkennungsergebnis eines von einem Infrarotsensor aufgenommenen Wärmebildes und/oder die Ausgabe eines von einem biometrischen Sensor erfassten Vitalzeichens.

5. Verfahren nach Anspruch 4, wobei
der vorbestimmte Bereich im Vorgang (a) durch Einstellen eines Erfassungsbereichs des Sensors bestimmt wird.

6. Verfahren nach einem der Ansprüche 1 bis 5, wobei
der Vorgang (a) auch ausgeführt wird, nachdem der Vorgang für das Erwärmungsgerät (1) durch den Vorgang (c) angenommen wurde, und wobei
wenn die Anwesenheit der Person von dem Vorgang (a) nicht erkannt wird, nach Beginn eines Heizvorgangs mit dem Erwärmungsgerät der Heizvorgang gestoppt wird, vorzugsweise nach Ablauf einer vorher festgelegten Zeitspanne.

7. Verfahren nach Anspruch 6, wobei
die Betriebsbedingungen des Heizvorgangs beim Abschalten des Heizvorgangs gespeichert werden.

8. Verfahren nach Anspruch 7, wobei
in einem Fall, in dem die Vorgänge (a) bis (c) ausgeführt werden und die Sprachschnittstelle nach dem Abschalten des Heizvorgangs wieder aktiviert wird,
der Heizvorgang unter Verwendung der gespeicherten Betriebsbedingungen wieder aufgenommen wird, oder
eine Anweisung empfangen wird, ob der Heizvorgang unter Verwendung der gespeicherten Betriebsbedingungen wieder aufgenommen werden soll.

9. Verfahren nach einem der Ansprüche 1 bis 8, wobei
der Vorgang (b) ferner die Information darüber umfasst, ob die Sprachschnittstelle aktiviert bzw. deaktiviert ist.

10. Verfahren nach einem der Ansprüche 1 bis 9, wobei
das Erwärmungsgerät (1) einen Bedienteil umfasst, der vom Benutzer physisch bedient werden kann, und wobei
ein Vorgang im Bedienbereich unabhängig davon akzeptiert wird, ob die Sprachschnittstelle aktiviert oder deaktiviert ist.

11. Computerprogramm, das einen Rechnerteil veranlasst, das Verfahren gemäß einem der Ansprüche 1 bis 10 auszuführen.

12. Steuerung, die die Aktivierung einer Sprachschnittstelle zur Bedienung eines Erwärmungsgeräts (1) mittels Sprachbefehl steuert, wobei das Erwärmungsgerät ein Mikrofon (50) hat, das Benutzersprachsignale für eine Spracherfassung erfasst, wobei die Steuereinheit Folgendes umfasst:
eine Kommunikationsschnittstelle, die so konfiguriert ist, dass sie ein Ausgangssignal eines Sensors empfängt, der in der Lage ist, innerhalb eines vorbestimmten Bereichs von einer Anordnungsposition des Erwärmungsgeräts (1) aus zu detektieren; und
einen Rechnerteil (102), wobei
der Rechnerteil (102) für die Ausführung folgender Schritte konfiguriert ist:
(a) Erkennen, ob sich eine Person im vorbestimmten Bereich befindet, basierend auf den empfangenen Ausgabedaten des Sensors;
b) Aktivieren oder Deaktivieren der Sprachschnittstelle entsprechend dem Ergebnis der Erfassung im Rahmen des Vorgangs (a),
(c) Ermöglichung der Bedienung des Erwärmungsgeräts per Sprachbefehl während eines Zeitraums, in dem die Sprachschnittstelle durch den Vorgang (b) aktiviert wird, wobei der Rechnerteil (102) so konfiguriert ist, dass er in einen Standby-Modus wechselt, um ein Aktivierungswort zu empfangen, und so konfiguriert ist, dass er nach dem Erkennen des Aktivierungsworts auf ein Bedienwort wartet, und so konfiguriert ist, dass er die Steuerung des Erwärmungsgeräts (1) gemäß dem Bedienwort ausführt, falls der Rechnerteil (102) das Bedienwort empfängt,
wobei
beim Vorgang (b) durch Deaktivierung der Sprachschnittstelle der Betrieb des Mikrofons (50) gestoppt wird, und
beim Vorgang (c) das Ermöglichen des Betriebs der Erwärmungsgerät auch einen Vorgang zum Starten der Erwärmungsgerät umfasst, wenn in dem Erwärmungsgerät (1) keine Erwärmung ausgeführt wird.

13. Steuerung nach Anspruch 12, wobei
die Steuerung im Erwärmungsgerät installiert ist.

14. Steuerung nach Anspruch 12, wobei
die Steuerung in einem Servergerät installiert ist, das über eine Kommunikationsverbindung mit dem Sensor und dem Erwärmungsgerät verbunden ist.

## Revendications

1. Procédé d'activation d'une interface vocale pour actionner un dispositif de chauffage au moyen d'une commande vocale, le dispositif de chauffage (1) comprenant un microphone (50) qui capte des signaux vocaux d'utilisateur à des fins de reconnaissance vocale, le procédé comprenant les opérations suivantes :
(a) la détection de la présence d'une personne dans un intervalle de distance prédéterminée par rapport à une position d'installation du dispositif de chauffage (1),
(b) l'activation ou la désactivation de l'interface vocale selon le résultat de détection de l'opération (a), et
(c) l'autorisation d'un actionnement du dispositif de chauffage par la commande vocale pendant une période durant laquelle l'interface vocale est activée par l'opération (b), avec passage en mode veille pour accepter un mot de réveil, et après détection du mot de réveil, attente de l'écoute d'un mot d'action, et si le mot d'action est accepté, exécution de la commande du dispositif de chauffage selon le mot d'action, étant entendu que
au cours de l'opération (b), la désactivation de l'interface vocale consiste à arrêter le fonctionnement du microphone (50), et
au cours de l'opération (c), l'autorisation d'un actionnement du dispositif de chauffage (1) comprend une opération visant à démarrer le chauffage alors que celui-ci n'est pas exécuté par le dispositif de chauffage (1).

2. Procédé selon la revendication 1, dans lequel
des informations caractéristiques d'un utilisateur autorisé à actionner le dispositif de chauffage (1) par l'interface vocale sont enregistrées au préalable, et dans lequel
l'opération (b) comprend les opérations suivantes :
(b1) si la présence d'une personne est détectée par l'opération (a), l'acquisition des informations caractéristiques de la personne dont la présence est détectée,
(b2) l'authentification de cette personne en tant qu'utilisateur, au moyen des informations caractéristiques de la personne acquises lors de l'opération (b1) et des informations caractéristiques de l'utilisateur enregistrées au préalable, et
(b3) si l'authentification est réussie lors de l'opération (b2), l'activation de l'interface vocale.

3. Procédé selon la revendication 2, dans lequel
les éléments d'informations caractéristiques consistent chacun en des informations biométriques, et dans lequel
l'opération (b2) est exécutée au moyen d'une empreinte vocale, une empreinte digitale, une image faciale, un motif veineux, un motif de l'iris et/ou un motif comportemental, représentant chacun un des éléments d'informations caractéristiques.

4. Procédé selon l'une quelconque des revendications 1 à 3, dans lequel
la détection de la présence d'une personne lors de l'opération (a) est exécutée au moyen d'un résultat de sortie d'un capteur, et dans lequel
le résultat de sortie du capteur est :
un résultat de reconnaissance d'une parole captée par un microphone (50), et/ou
un résultat de sortie autre qu'un résultat de reconnaissance d'une parole, tel qu'une sortie d'un capteur de contact capable de détecter le contact d'une personne, un résultat de reconnaissance d'une image captée par un capteur d'image, un résultat de reconnaissance d'une image thermique captée par un capteur IR et/ou une sortie d'un paramètre vital capté par un capteur biométrique.

5. Procédé selon la revendication 4, dans lequel
la distance prédéterminée lors de l'opération (a) est déterminée par le réglage de la distance de détection du capteur.

6. Procédé selon l'une quelconque des revendications 1 à 5, dans lequel
l'opération (a) est également exécutée après que l'actionnement du dispositif de chauffage (1) a été accepté par l'opération (c), et dans lequel
lorsque la présence de la personne n'est pas détectée lors de l'opération (a) après qu'une opération de chauffage mettant en œuvre le dispositif de chauffage a démarré, l'opération de chauffage est arrêtée, de préférence après l'écoulement d'une période prédéterminée.

7. Procédé selon la revendication 6, dans lequel
les conditions de fonctionnement de l'opération de chauffage sont enregistrées lorsque l'opération de chauffage est arrêtée.

8. Procédé selon la revendication 7, dans lequel
si les opérations (a) à (c) sont exécutées et que l'interface vocale est à nouveau activée après l'arrêt de l'opération de chauffage :
l'opération de chauffage est reprise en utilisant les conditions de fonctionnement enregistrées, ou
une instruction indiquant si l'opération de chauffage doit être reprise en utilisant les conditions d'opération enregistrées est reçue.

9. Procédé selon l'une quelconque des revendications 1 à 8, dans lequel
l'opération (b) comprend en outre l'annonce du fait que l'interface vocale est activée et/ou désactivée.

10. Procédé selon l'une quelconque des revendications 1 à 9, dans lequel
le dispositif de chauffage (1) comprend une section d'actionnement qui peut être actionnée physiquement par l'utilisateur, et dans lequel
un actionnement propre à la section d'actionnement est accepté indépendamment du fait que l'interface vocale soit activée ou désactivée.

11. Programme informatique comprenant des instructions qui, lorsque le programme est exécuté par une section de calcul, amènent la section de calcul à exécuter le procédé pour l'actionnement selon l'une quelconque des revendications 1 à 10.

12. Dispositif de commande qui commande l'activation d'une interface vocale pour actionner un dispositif de chauffage (1) au moyen d'une commande vocale, le dispositif de chauffage comprenant un microphone (50) qui capte des signaux vocaux d'utilisateur à des fins de reconnaissance vocale, le dispositif de commande comprenant :
une interface de communication conçue pour recevoir une sortie d'un capteur disposé pour pouvoir détecter l'intervalle d'une distance prédéterminée par rapport à la position d'installation du dispositif de chauffage (1), et
une section de calcul (102) ;
ladite section de calcul (102) étant conçue pour exécuter :
(a) la détection de la présence d'une personne dans l'intervalle de distance prédéterminée en fonction de la sortie reçue du capteur,
(b) l'activation ou la désactivation de l'interface vocale selon le résultat de détection de l'opération (a), et
(c) l'autorisation d'un actionnement du dispositif de chauffage par la commande vocale pendant une période durant laquelle l'interface vocale est activée par l'opération (b), la section de calcul (102) étant conçue pour passer en mode veille pour accepter un mot de réveil, pour attendre l'écoute d'un mot d'action après avoir détecté le mot de réveil, et pour exécuter la commande du dispositif de chauffage (1) selon le mot d'action si la section de calcul (102) accepte ce mot d'action, étant entendu que
au cours de l'opération (b), la désactivation de l'interface vocale consiste à arrêter le fonctionnement du microphone (50), et
au cours de l'opération (c), l'autorisation d'un actionnement du dispositif de chauffage comprend une opération visant à démarrer le chauffage alors que celui-ci n'est pas exécuté par le dispositif de chauffage (1).

13. Dispositif de commande selon la revendication 12,
ledit dispositif de commande étant installé dans le dispositif de chauffage.

14. Dispositif de commande selon la revendication 12,
ledit dispositif de commande étant installé dans un dispositif serveur qui est connecté de manière communicante au capteur et au dispositif de chauffage.
